# EUROPEAN PATENT SPECIFICATION

(11) **EP 3 097 018 B1**
(45) Date of publication and mention of the grant of the patent: **13.06.2018**
(21) Application number: 14812653.5
(22) Date of filing: 25.11.2014
(51) Int. Cl.: B65B 43/26, B65G 57/10, B65G 59/02

(54) **AUTOMATIC INSTALLATION FOR THE AUTOMATIC OPENING OF CRATES FOR ORTHI-CULTURAL AND OTHER PRODUCTS**
AUTOMATISCHE ANLAGE ZUM AUTOMATISCHEN ÖFFNEN VON KISTEN FÜR GARTENBAU- UND ANDERE PRODUKTE
INSTALLATION AUTOMATIQUE D'OUVERTURE AUTOMATIQUE DE CAISSES DE PRODUITS D'HORTICULTURE ET D'AUTRES PRODUITS

(30) Priority: 24.01.2014 IT PN20140004
(43) Date of publication of application: 30.11.2016
(73) Proprietor: Unitec S.p.A., 48022 Lugo (Ravenna) (IT)
(72) Inventor: BENEDETTI, Luca, 48020 Savarna (RA) (IT)
(74) Representative: Gonella, Mario
(86) International application number: PCT/IB2014/066325
(87) International publication number: WO 2015/110878

(56) References cited:
- WO-A1-2012/156375
- DE-A1- 19 515 998
- DE-U1-202005 015 887

## Description

The present invention relates to a perfected installation to automatically move stacks of closed crates and stacks of opened crates produced in an apparatus apt to open the crates normally used to contain horticultural products; in fact, it has to be reminded that after being used and emptied, said crates are closed again reclining inwards the relative vertical walls.

The object of this operation is that of considerably reducing the overall bulk of said crates, as after being used, they have to be rearranged so as to be sent again to the harvesting and filling centres.

Such need has been clearly explained in patent WO 2012/156375 of the same applicant, and, for brevity, which it can be referred to and therefore it will not be discussed any further.

Anyway, as these crates can have different sizes, both for the type of content and mainly for the different destination and downstream commercial requirement, suitable apparatuses apt at opening crates having different sizes have been devised and disclosed; therefore, they offer a high usage flexibility, which considerably increases their productivity and hence their economic value.

Such apparatuses are described in the Italian patent application N. PN2013A000053, which, for brevity, it can be referred to.

By using such apparatuses industrially it has been seen that their increase in productivity, though high, was limited by the fact that the operations,
- of loading into said apparatuses stacks of closed crates coming from the harvest centres of the horticultural products,
- and after opening them, the symmetrical unloading and removal of the stacks of crates to be dispatched to the same centres,
were carried out by means of traditional means and methods, which then reduced the overall efficiency of the whole process of opening the crates and more generally it reduced the efficiency of the related logistics that is of both workers and means using said apparatuses.

It would therefore be desirable, and it is the main object of the present invention, to realize an installation apt at carrying out, using widely known and tested techniques,
- a method of loading a succession of single stacks of closed crates to and into an automatic installation for opening said crates,
- and, after opening said crates, of gathering them again in a succession of stacks of opened crates and unloading said new stacks onto the respective pallets,
wherein said operations:
- of unloading said stacks of closed crates from the receiving pallet,
- of introducing said stacks in the apparatus for opening crates,
- of extracting the stacks of opened crates,
- and of the final orderly loading said crates onto suitable outgoing pallets, are carried out with completely automatic, both executive and command and control methods and means.

Such object is achieved by means of an installation realized according to the appended claims.

Characteristics and advantages of the invention will become apparent from the following description, for exemplification only but not limited to, with reference to the appended figures wherein:
- Figures 1, 2, 3, 4, 5 and 6 show a schematic top plan view of a plurality of successive steps of the operating organs of an installation according to the invention,
- Figure 7 shows a schematic perspective view of a pallet containing a plurality of stacks of closed crates,
- Figure 8 shows a top plan view describing an example of a real construction of the installation of figure 1,
- Figure 9 shows a diagonal perspective view of a real example of the installation of figure 8.

As an apparatus according to the invention is constructively very complex and articulated for the amount of components and devices, and generally of the support, connecting, etc. means to assemble, in the following description it will be referred to very schematic and symbolic drawings and/or figures completely different, in their representation, from the corresponding means and devices used in the real apparatus of the invention; the purpose of the choice of this type of representation is only that of facilitating the reader in understanding the invention by focusing his attention only on the elements being described.

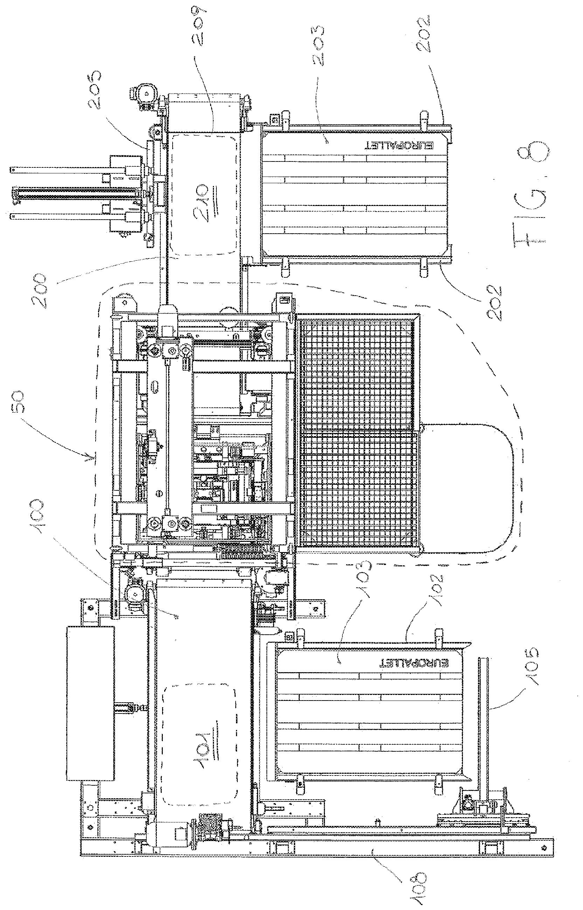

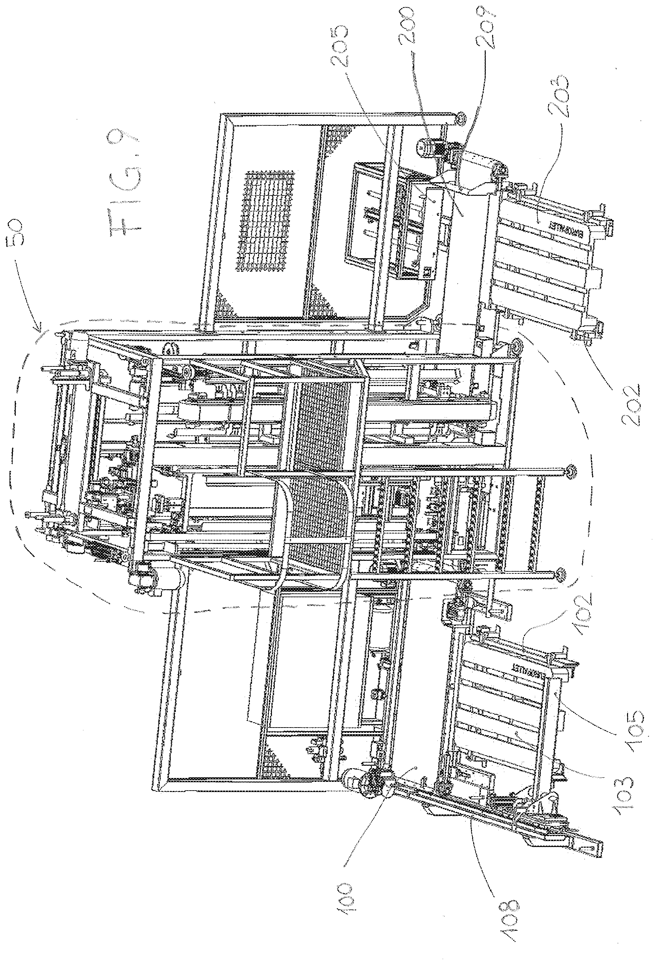

Moreover, in case it is desired to verify the congruity of said representations with a real apparatus according to the invention, the appended figures 8 and 9 give the skilled in the field the necessary and sufficient information to recognize, in those figures, the main assemblies or functional groups which are shown in detail in the previous and schematic figures from 1 to 7.

In order to make the description simple, as described in the aforementioned WO 2012/15, the installation of the present invention is generally composed of, from the functional point of view, two distinct working stations, and that is, a first station S-1 wherein the succession of stacks of closed crates arrives and which is provided with organs and mechanisms to open the single crates one at a time, and to move them to a second station S-2, where the same succession of crates, but this time opened, are restacked and definitively moved outside the whole installation.

Therefore, for preciseness, it is clarified that the part of the apparatus not explicitly described here and concerning the means and methods to open the closed crates in the apparatus and to make them available as a succession of stacks of opened crates, is to be understood as described in said WO 2012/156375.

Then, synthetically, the apparatus to open the crates carries out the following operations:
a) moving one or more stacks of closed crates to a first receiving and loading station (S-1),
b) opening and blocking the opposed walls of the crate placed on the top of a first stack,
c) transferring said opened crate, in a horizontal direction, into a position overlying a stack of previously opened crates arranged on a second working station (S-2) able of generating a succession of stacks (16) of opened crates,
d) and lowering said opened crate to the support level on the respective bottom plane.

A first general description is herewith given; later it will be given a detailed description of the installation and of how it works.

The installation of the invention is mainly based on operating means and methods which load onto an incoming conveyor belt a plurality of stacks of crates in a sequence and in multiple amount, that is more than one stack at a time are loaded onto the infeed conveyor.

These stacks are picked from a pallet placed beside said infeed conveyor, on that pallet there are deposed two or more rows of stacks of crates arranged into rows parallel one to the other, and parallel to the conveyor as well, that is, they are parallel to the direction of the infeed conveyor motion.

Each row comprises two or even more stacks placed side by side in an orderly way and basically adjacent, as it will be apparent from the figures.

For example, in practical terms, on the pallet there is a first row of stacks adjacent to the conveyor, and on the same pallet, behind the first row, there is a second row of stacks.

In order to load the stacks of the first row on the infeed conveyor, there is placed a pushing means at the back of, that is behind the second row of stacks.

By operating said pushing means against said second row, the related stacks come into contact with the stacks of the first row and by continuing the stroke of the pushing means, they push them towards and then onto said infeed conveyor.

After it has made the single stacks go towards the apparatus for opening the crates, the space before said pallet is of course emptied from the previous stacks; at this point a further stroke of said pushing means towards the conveyor makes the second row of stacks move as well and causes it to get onto the same infeed conveyor.

In this way, on the same conveyor there are loaded, in the given example, all the four stacks placed on the pallet, but their loading is carried out two stacks at a time; besides, it is employed only one pushing means placed at the back of the stacks farther from the infeed conveyor, and the pushing action on the stacks of the first row is carried out giving the stacks of the second row, they too pushed by the pushing means, the task of pushing forward, that is onto the conveyor, the stacks of the first row.

As regards picking the stacks of the opened crates, it is used a suitable outfeed conveyor; this one is placed downstream the apparatus for opening the crates, and to unload the related stacks it is basically used the same criterion and the same general operating mechanism, anyway keeping in mind that here the operations have to be reversed.

Therefore only one pushing means pushes two or more stacks of crates on the conveyor, out of the conveyor and on the adjacent pallet.

Subsequently, when other stacks of crates are on the outfeed conveyor but before the same pallet, the same pushing means also pushes these second stacks onto the pallet; as this one is already partially loaded with the previous stacks, the last stacks automatically push forward the previous stacks, so that the space on the pallet, previously taken up by the first stacks, is finally taken up by the last loaded stacks.

Herewith is the detailed description.
With reference to the figures, said first receiving and loading station S-1 comprises:
- a first loading conveyor 100, provided on its part opposed to the part directly feeding the apparatus for opening the crates 50, with a first loading end 101 of said stacks of closed crates,
- a support means or frame 102 adjacent to said first end 101;
- a first pushing means 105.

Said support means 102 basically consists of a frame whereon single bases or pallets 103, as they will be referred to further on, can be deposed, which have previously been loaded with one or more stacks of closed crates.

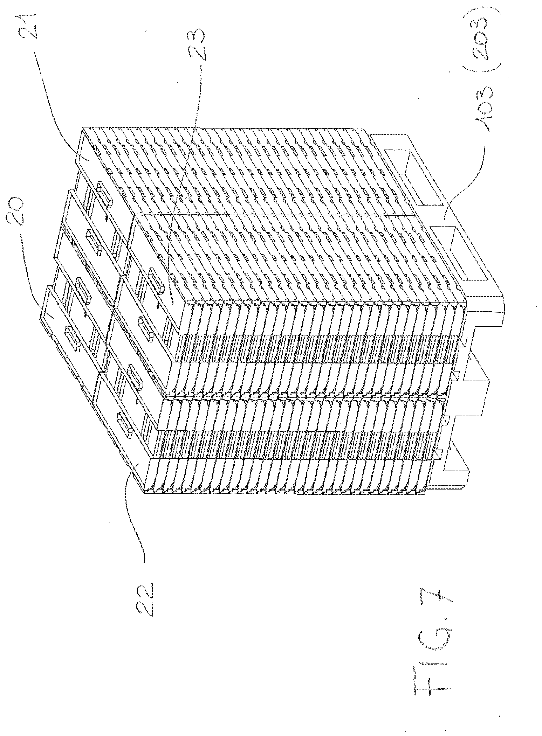

Preferably such pallets are loaded with four distinct stacks 20, 21, 22, 23 having a regular "straight grid" geometry, as schematically shown in figure 7.

Said frame 102 is placed so that one of its sides 107 is adjacent and at about the same level as that of the loading end 101 of said first conveyor, so that it is possible and easy to simply push the stacks of closed crates, which are on the related pallet 103, out of this pallet and onto said loading end 101 of the conveyor 100.

In order to push said crates, it is provided and employed pushing means, preferably made up of a simple bar 105, basically placed horizontally and parallel to the first conveyor 100, and positioned near the side 106 of said frame 102, on the opposed side of said side 107.

This bar 105, suitably positioned at a level slightly higher than the level of the upper surface of the pallet 103, is made able, with means and methods known *per se,* to be moved towards the conveyor 100, so that it can intercept the stacks of closed crates lying on the pallet 103 and push them neatly towards and onto said loading end 101.

Therefore, said bar is preferably oriented parallel to the direction of said first conveyor 100, and provided with displacement means, preferably a properly motorized guide 108 whereon an end 105-A of such bar 105 is caused to slide, in order to move it towards said first conveyor 100 with a translatory rectilinear motion.

Said bar 105 is also able to be moved into rotation according to a rotation axis "X":
- orthogonal to the first conveyor 100,
- basically horizontal,
- and passing through the same end 105-A on which said motorized guide 108 is engaged.

The operation of such receiving and loading station S-1 is herewith described.

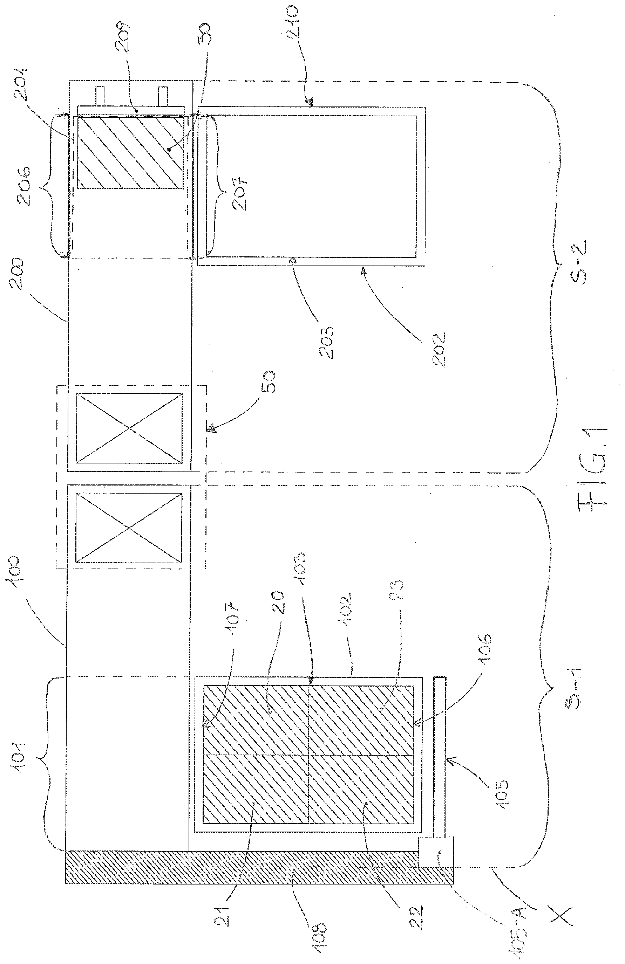

With reference to figure 1, the pallet 103 is already deposed on said frame 102, and said bar 105 is placed behind the same pallet, that is, the farthest from the conveyor 100, and besides it is lowered, and hence behind the 4 stacks of closed crates 20, 21, 22, 23 as well.

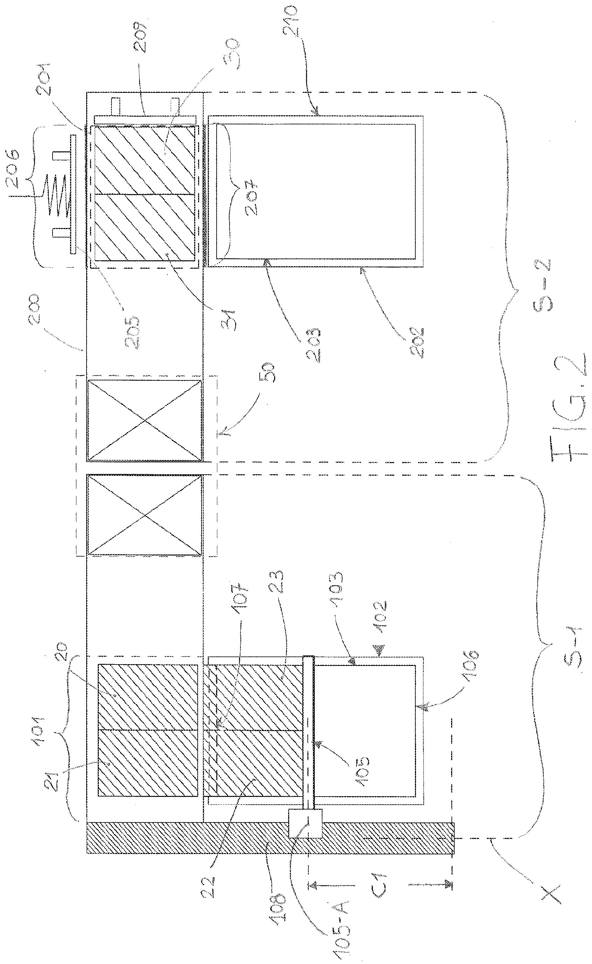

With reference to figure 2, said bar 105 is moved forward, that is towards the conveyor 100 for a first predefined stroke "C1".

The extent of such stroke has to be so as to push the two stacks 20 and 21, nearest to the conveyor 100, out of the pallet 103 to get onto said conveyor 100, where they keep their related position, as the motion impressed by the bar 105 is a translatory rectilinear one.

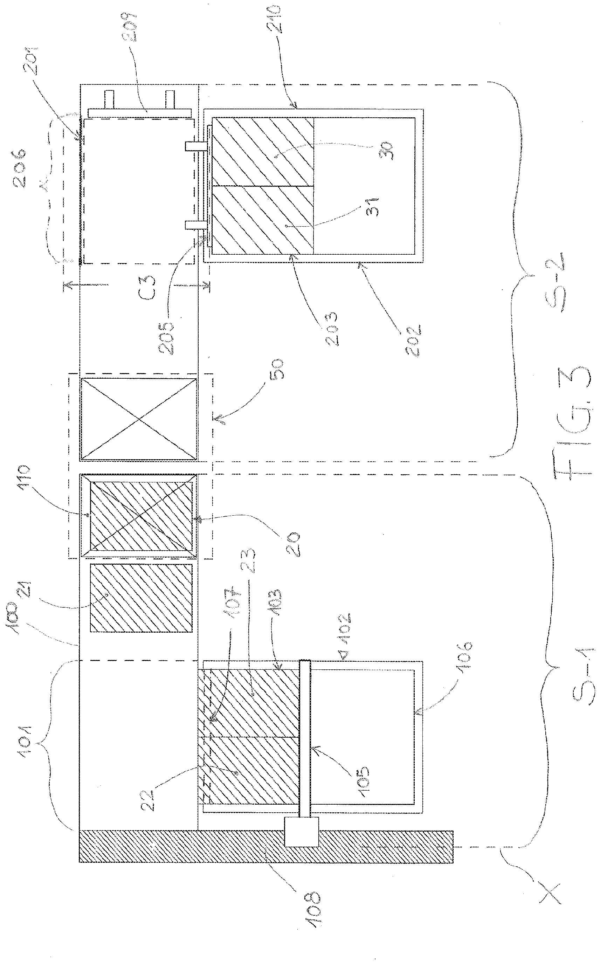

With reference to figure 3, the conveyor 100 is activated causing it to move towards its end 110 opposed to said loading end 101 until the first stack is placed exactly in the position in which the apparatus 50 for opening the crates can engage said stack 20 and start the opening procedure, known *per se.*

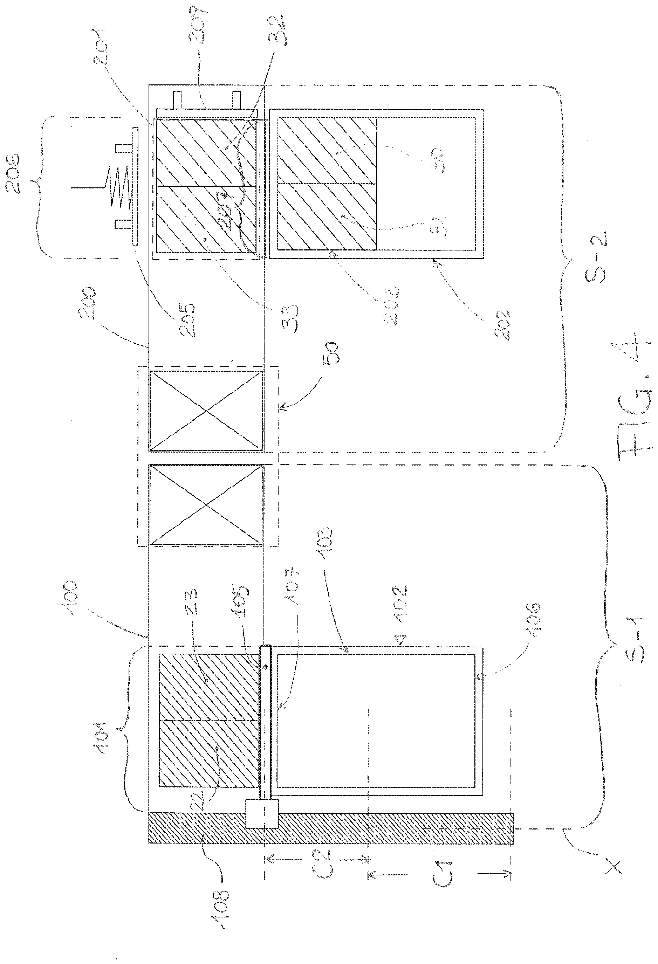

With reference to figure 4, said bar 105 is again moved forward, that is towards the conveyor 100 for a predefined second stroke "C2".

The extent of the stroke has to be such as to push also the two remaining stacks 22 and 23, at first farthest from the conveyor 100, out of the pallet 103 in order to get onto said conveyor 100, where they keep their related position.

At this point it has to be observed that:
- said second stroke "C2" can occur only when the motion of the conveyor 100 is of such extent to have "cleared" the space on said loading end 101 so as to allow the loading of the two last stacks 22, 23 onto it and
- in any case, the motion of the conveyor has to be slaved and controlled by the apparatus for opening the crates 50, as said conveyor has to feed said apparatus with a new stack of closed crates present on the conveyor 100 only after the previous stack has been completely bottomed.

Anyway, it is apparent that such functional and constructive constraints are completely understandable by the skilled in the field, as of course, it is to be avoided any risk of interference between the stacks on the conveyor 100, either caused by a too early loading of new stacks from the pallet 103, or caused by a too early progress of the conveyor when the previous stack is still on the opening apparatus 50.

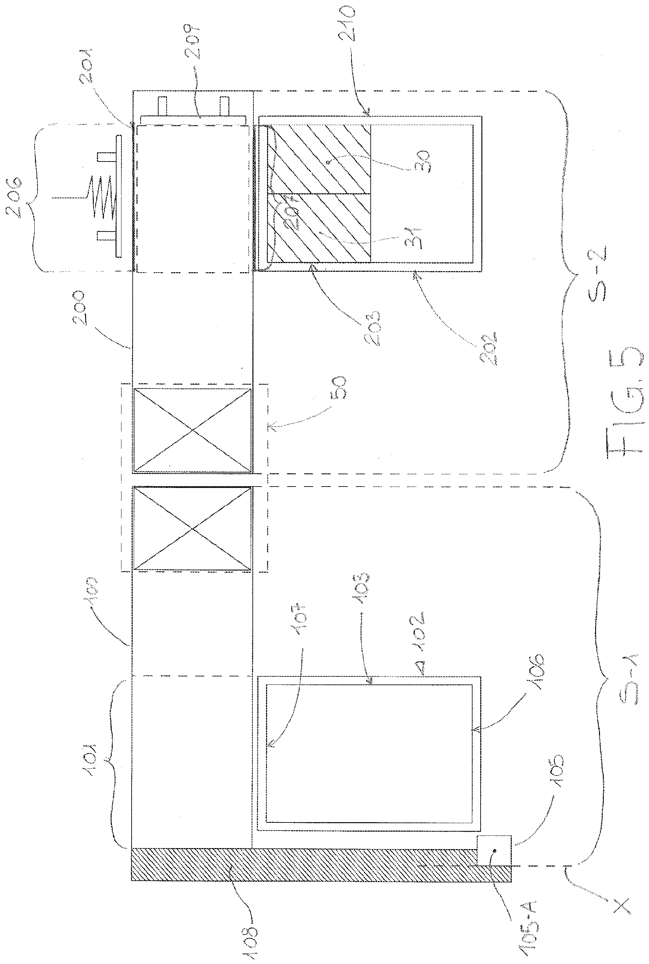

With reference to figure 5, said bar 105 goes back to its starting position along the motorized guide 108 but with a different arrangement, that is it does not remain horizontal but it is rotated around the axis "X" so as to clear the passage on said frame 102 and therefore fundamentally allow both the precautionary removal of the just emptied, still therein pallet, and to move a successive pallet loaded with stacks of closed crates onto this frame.

This series of operations ends when the bar 105 goes back to its starting position and arrangement, that is horizontal, as shown in figure 1.

Obviously these "return" operations are completely identical, but of course reversed with respect to the previous "loading" operations and therefore the respective figures are omitted for simplicity's sake.

With reference to the figures, said second unloading station S-2 comprises:
- a second unloading conveyor 200 provided, on its part opposed to the part fed by the apparatus for opening the crates 50, with an unloading end 201 of said stacks of opened crates,
- a support structure 202 adjacent to said end 201,
- a second pushing means 205.

Said support structure 202 basically consists of a frame whereon there can be deposed single bases or pallets 203 completely similar or identical to the previous ones.

Preferably such pallets are loaded with four distinct stacks 30, 31, 32, 33 having a regular "straight grid" geometry, completely identical to that on the pallets with the stacks of closed crates.

On said second conveyor 200, and separated from this one, it is placed a stopping means 209 fixed to the installation structure, and able of being a permanent obstacle for the stacks of opened crates transported by the conveyor 200; of primary importance is the fact that said stopping means 209 is positioned so that the successive stacks of opened crates are stopped against said stopping means 209 exactly before said frame 202, so that a lateral motion of these stacks makes them move, in a precise way, from the conveyor 200 to the pallet on said frame 201 with methods which will be later described.

Said frame 202 is placed so that one of its sides 207 is adjacent to said frame 202 and at about the same level as that of said unloading end 201, defined by the position of said stopping means 209 of said second conveyor, in this way, it is possible and easy to simply push the stacks of opened crates, which are on the related conveyor 200, out of it and onto the pallet 203 which is on said frame 202.

In order to push said crates, it is made and employed pushing means 205, basically placed horizontally and parallel to the second conveyor 200, and positioned near its side 206 on the opposed part of said side 207 of the same conveyor 200.

This pushing means 205, suitably positioned at a level slightly higher than that of the upper surface of the pallet 203, is made able, with means and methods known *per se,* to be moved towards the conveyor 200, so that it can intercept the stacks of opened crates lying on the conveyor 200 and pushes them neatly towards and onto the related adjacent pallet 203 placed on the related frame 202.

Therefore said pushing means 205 is preferably oriented parallel to the direction of said second conveyor 200, and provided with displacement means, known *per se,* in order to make it move with a translatory rectilinear motion towards said pallet 203.

As for said unloading station S-2, its operation is herewith described.

With reference to figure 1, the stack 30 is already deposed on the conveyor 200 that, moving forward, has made said stack 30 get against said stopping means 209, against which it has naturally stopped.

With reference to figure 2, a new stack of opened crates 31 has been deposed on the second conveyor 200 whose forward motion, suitably controlled, has carried said second stack 31 against the previous crate 30, already stopped by the stopping means 209; therefore said two crates 30 and 31 come to be together on one of their sides and remain durably in the position defined by the stopping means 209, even if the related conveyor should continue to move.

With reference to figure 3, said pushing means 205 is moved forward, that is towards the related pallet 203 for a third predefined stroke "C3".

The extent of stroke has to be such as to push the two stationary stacks 30 and 31 out of the conveyor 200, towards the related pallet and finally onto that, where they keep their related position as the motion given by the pushing means 205 is a translatory rectilinear one.

With reference to figure 5, the pushing means 205 is brought back to the starting position to enable the conveyor 200 to move two other stacks of opened crates 32 and 33 against said stopping means 209, according to methods completely similar to those described in the previous points 6) and 7).

With reference to figure 4 the conveyor 200 is activated so that the successive stacks 32 and 33, placed thereon in a programmed succession, subsequently stop as described above, and that is, the first stack 32 is blocked by the stopping means 209, and subsequently the following stack 33 is blocked against the stack 32 preceding it but already stopped, as said stack 32 acts as a stopping means with respect to the second stack 33; basically, regarding the position of the stacks on the conveyor 200, it occurs the same situation as in the previously described figure 2, but with different stacks as they are successive.

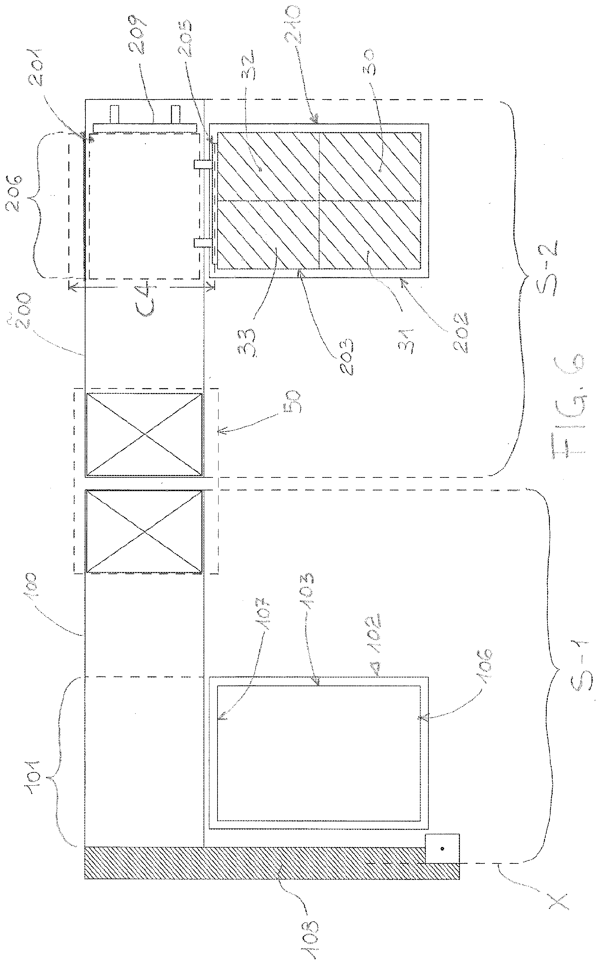

With reference to figure 6, said pushing means 205 is again moved forward, that is, towards the pallet 203 for a predefined fourth stroke "C4".

The extent of stroke has to be such as to make it possible to push sideways the two stacks 32 and 33 enough so that these go into contact with the stacks 30 and 31 already loaded onto the first part of the pallet 203, and then they are pushed enough to move them on new farther positions on the same pallet 203 where they keep their related position.

It will be evident that, in this way, the space on the conveyor 200 is completely emptied in order to allow the arrival of two other stacks of opened crates, which of course are accumulated according to what already described.

At this point it must be observed that:
- said operation of the pushing means 205 has to be coordinated with the motion of the conveyor 200, as it must not occur that said conveyor might transfers further stacks in the area of the pushing means 205 when said pushing means 205 is still present in the space on the same conveyor and,
- said fourth stroke "C4" can be carried out only when the motion of the conveyor 200 is of such extent so as to have "loaded" the space on said loading end 201 with two successive stacks of opened crates, so as to make it possible the proper loading of two stacks at a time on the related pallet 203,
- anyway, also in this case, the motion of the conveyor has to be slaved and controlled by the apparatus for opening the crates 50, as said conveyor 200 has to remove a new stack of opened crates from said apparatus only after the previous stack has been, in its turn, removed.

Basically, the motion of the outfeed conveyor 200 has to be slaved both to the production of opened crates by the apparatus 50, and to the state of the stacks before the related pushing means 205.

Anyway, it is clear that such constructive and functional constraints are completely clear to the skilled in the field, as, of course, it must be avoided any risk of interference between the stacks on the conveyor 200 that can be caused:
- by a too delayed loading of new stacks on the pallet 203,
- or provoked by an early progress of the conveyor 200 when the previous stacks have not yet been loaded on the pallet 203.

After having loaded the two distinct stacks 30, 31 and 32, 33, said pushing means 205 returns to its starting position in order to start a new working cycle completely identical to the one just described.

This series of operations is ended with the simple return of the pushing means to the starting position, that is external to the outfeed conveyor 200, as shown in figure 2.

The related representation of such operation of return and reinstatement of the starting condition, which can be seen in figure 2, is omitted as it is in itself obvious.

Of course these "return" operations are completely identical, but of course reversed with respect to the previous operations.

The skilled in the field will have noticed that the present teaching can be employed, with due installation and working modifications, also for loading and unloading pallets where there are placed a number of stacks for each front row in a number different from what exemplified above and in the figures, and typically more than two; and of course the same consideration applies to what is related to the unloading operations from the outfeed conveyor which transports the opened crates.

According to a perfected embodiment of the invention, all said manoeuvring organs, various kinds of actuators, first conveyor 100, first pushing means, second conveyor 200, second pushing means etc. are all connected to a control and command unit, not shown, wherein there are stored all the commands to activate, with a pre-determined sequence and, above all, of a pre-defined extent, all of said working organs, devices , means, etc. according to the complete dimensions of each type of crates to be opened.

It is to be noted that suitable sensor means, not shown, are provided which are placed on the two conveyors 100 and 200 apt to detect the presence or absence of stacks in precise and pre-determined positions, so as to allow an orderly operation of the installation according to the described method; of course said sensors, too, are connected to the control and command unit.

In this way, it becomes possible and immediate to introduce a single instruction into said command and control unit so that all the organs, devices, actuators, sensors, etc. are positioned or actuated automatically, sequentially and synchronized by means of the respective corresponding parameters stored into said control and command unit.

Not only, but the same unit is able to store, in an orderly and aggregate way, the parameters corresponding to a plurality of types of crates showing different sizes, so that, as the skilled in the field will already have understood, it is possible and immediate to introduce into said command and control means a simple coded instruction representative of a specific crate type and/or pallet, and automatically obtain that said command and control means processes and analyzes said coded instruction into a plurality and orderly succession of commands and transmits to said organs, devices, actuators, etc. suitable signals able of determining in them the correct positioning and operation corresponding to the type of selected stack and of pallet.

Anyway, the realization of such command and control unit and the programming of the related data storage and instructions are activities completely feasible by the skilled in the field, therefore they will not described any further.

## Claims

1. Installation to automatically carry out the loading and unloading operations of an apparatus able of opening the closed side walls of a plurality of crates (20, 21, 22, 23, 30, 31, 32, 33), preferably of horticultural products, provided with a bottom plane and with two couples of opposed walls, each of them being hinged on said bottom plane and being placed in an ordered and identical way, and vertically laid one on the other so as to form one or more stacks, said installation being able of carrying out the following operations:
a) moving one or more stacks of closed crates (20, 21, 22, 23) in a first of receiving and loading station (S-1),
b) opening and blocking the opposed walls of the crate placed on the top of a first stack,
c) transferring an opened crate in a horizontal direction into a position overlying a stack of previously opened crates arranged on a second unloading station (S-2) able of generating a succession of stacks of opened crates (30, 31, 32, 33),
d) and lowering said opened crate to the support level on the respective bottom plane,
**characterized in that** said first receiving and loading station (S-1) comprises:
- a first loading conveyor (100) provided with a first loading end (101) of said stacks of closed crates,
- first support means (102) adjacent to said first end (101) able of engaging a pallet (103) on which one or more stacks of closed crates (20, 21, 22, 23) can be deposed,
- first handling means able of transferring by a translatory motion said stacks of closed crates (20, 21, 22, 23) from said pallet (103) to said first loading end (101), said first handling means comprising a first pushing means (105) placed in correspondence of the side (106) of said first support means (102) opposed to the side (107) adjacent to said first conveyor (100), said first pushing means (105) being arranged at a level slightly higher of the level of said first conveyor, and comprising a horizontal bar oriented preferably parallel to the direction of said first conveyor, said bar being provided with displacement means, preferably a properly motorized guide (108) whereon an end (105-A) of said bar is made to slide on, said bar being able to be moved towards said first conveyor and away from it with a translatory and substantially orthogonal motion with respect to said first conveyor (100), said bar (105) being provided with means able of making it to move into rotation according to a rotation axis (X) basically horizontal and orthogonal to the bar itself, said rotation axis (X) passing through said end (105-A) of said bar (105) on which said motorized guide (108) is engaged, so as to clear the passage over said first support means (102).

2. Installation according to claim 1, **characterized in that** said second unloading station (S-2) comprises:
- a second unloading conveyor (200) provided with a second unloading end (201) of said succession of stacks of open crates (30,31,32, 33),
- second supporting means (202) adjacent to said second end (201), and able of engaging a pallet (203) on which a plurality of open crates (30, 31, 32, 33) may be laid down,
- second handling means able of transferring with a translatory motion said stacks of opened crates from said second unloading end (201) to said pallet (203).

3. Installation according to claim 2, **characterized in that** said second handling means comprise a second pushing means (205) arranged substantially horizontal and parallel to said second conveyor (200) and arranged next to the side (206) of said second conveyor (200) which is placed opposed to the side (207) of said second conveyor (200) adjacent to said second supporting means (202).

4. Installation according to claim 3, **characterized in that** it comprises a stopping means (209) placed on the position of said second unloading conveyor (200):
- substantially orthogonal to said second conveyor,
- and preferably corresponding to the position of said second unloading end (201) aligned to an end portion (210) of said second supporting means (202).

5. Installation according to any previous claim, **characterized in that** it comprises command and control means, and respective linking means, able of implementing successively, also in a non-continuous way, the following operations:
- activating said bar (105) so as to place it horizontally,
- moving said bar towards said first conveyor (100) for a first pre-defined stroke (C1),
- making said first conveyor (100) to move forward for a pre-determined length,
- moving again said bar (105) towards said first conveyor (100) for a second pre-determined stroke (C2).

6. Installation according to claims 4 or 5, **characterized in that** it comprises command and control means able of:
- making said second conveyor (200) to move forward until one or more stacks of open crates (30, 31) accumulate successively against a first stack touching said stopping means (209),
- making said second pushing means (205) to work for a third pre-determined stroke (C3), and return back in the starting position,
- making said second conveyor (200) to move forward until a successive accumulation of a predetermined number of crates against a first stack in contact against said stopping means (209),
- moving again forward said second pushing means (205) for a respective fourth pre-determined stroke (C4).

7. Installation according to claims 5 and 6, **characterized in that** it comprises command and control means able of:
- storing the parameters corresponding to the horizontal sizes of a respective plurality of types of crates showing different sizes,
- introducing into said command and control means a coded instruction representative of a specific crate type, and automatically obtaining that said command and control means process and transmit to the working devices, organs, devices, actuators charged to move said stacks of closed and open crates on said two respective conveyors (100, 200) and on said first and second pushing means (105, 205) suitable signals able of determining either:
• the opening and closing command of said bar (105),
• the lengths of said strokes (C1, C2, C3, C4) of the respective bar and of the respective second pushing means (205),
• the length of the moving lengths forward of said first and second conveyor (100, 200),
• the working sequence of said bar (105) of said first conveyor (100), of said second conveyor (200), and of said second pushing means (205).

## Patentansprüche

1. Anlage zum automatischen Ausführen des Ladevorgangs und Entladevorgangs einer Vorrichtung, die in der Lage ist, die geschlossenen Seitenwände mehrerer Kisten (20, 21, 22, 23, 30, 31, 32, 33), vorzugsweise von Gartenbauprodukten, zu öffnen, wobei die Kisten mit einer Bodenebene und mit zwei Paaren aus gegenüberliegenden Wänden versehen sind, die jeweils gelenkig mit der Bodenebene verbunden und in einer geordneten und identischen Weise angeordnet und vertikal aufeinander gestapelt sind, sodass ein oder mehrere Stapel gebildet werden, wobei die Anlage in der Lage ist, die folgenden Funktionen auszuführen:
a) Bewegen eines oder mehrerer Stapel aus geschlossenen Kisten (20, 21, 22, 23) in einer ersten Empfangs- und Ladestation (S-1),
b) Öffnen und Blockieren der gegenüberliegenden Wände derjenigen Kiste, die oben auf einem ersten Stapel angeordnet ist,
c) Überführen einer geöffneten Kiste in horizontaler Richtung zu einer Position, die über einem Stapel aus zuvor geöffneten Kisten liegt, der auf einer zweiten Entladestation (S-2) angeordnet ist, die in der Lage ist, eine Abfolge von Stapeln aus geöffneten Kisten (30, 31, 32, 33) zu bilden,
d) und Absenken der geöffneten Kiste auf die Auflagehöhe auf der jeweiligen Bodenebene,
**dadurch gekennzeichnet, dass** die erste Empfangs- und Ladestation (S-1) aufweist:
- eine erste Ladetransporteinheit (100), die mit einem ersten Ladeende (101) für Stapel aus geschlossenen Kisten versehen ist,
- eine erste Halteeinrichtung (102) benachbart zu dem ersten Ende (101), die in der Lage ist, in eine Palette (103) einzugreifen, auf der ein oder mehrere Stapel aus geschlossenen Kisten (20, 21, 22, 23) angeordnet werden können,
- eine erste Handhabungseinrichtung, die in der Lage ist, mittels einer geradlinigen Bewegung die Stapel aus geschlossenen Kisten (20, 21, 22, 23) von der Palette (103) zu dem ersten Ladeende (101) zu überführen, wobei die erste Handhabungseinrichtung eine erste Schiebeeinrichtung (105) aufweist, die in Entsprechung zu der Seite (106) der ersten Halteeinrichtung (102) gegenüberliegend zu der Seite (107), die benachbart zu der ersten Transporteinheit (100) liegt, angeordnet ist, wobei die erste Schiebeeinrichtung (105) auf einer Höhe angeordnet ist, die geringfügig höher als die Höhe der ersten Transporteinheit ist und einen horizontalen Stab aufweist, der vorzugsweise parallel zu der Richtung der ersten Transporteinheit orientiert ist, wobei der Stab mit einer Verschiebeeinrichtung, vorzugsweise einer geeignet motorisierten Führung, (108) versehen ist, auf der ein Ende (105-A) des Stabs gleitend bewegbar ist, wobei der Stab in der Lage ist, in Richtung zu der ersten Transporteinheit hin und davon weg in einer geradlinigen und im Wesentlichen senkrechten Bewegung in Bezug auf die erste Transporteinheit (100) bewegt zu werden, wobei der Stab (105) mit einer Einrichtung versehen ist, die in der Lage ist, eine Drehung entsprechend einer Drehachse (X), die im Wesentlichen horizontal und senkrecht zu dem Stab selbst angeordnet ist, auszuführen, wobei die Drehachse (X) durch das Ende (105-A) des Stabs (105) verläuft, mit welchem die motorisierte Führung (108) im Eingriff ist, um den Durchgang über der ersten Halteeinrichtung (102) freizumachen.

2. Anlage nach Anspruch 1, **dadurch gekennzeichnet, dass** die zweite Ladestation (S-2) aufweist:
- eine zweite Ladetransporteinheit (200), die mit einem zweiten Entladeende (201) für Abfolge aus Stapeln aus offenen Kisten (30, 31, 32, 33) versehen ist,
- eine zweite Halteeinrichtung (202) benachbart zu dem zweiten Ende (201), die ausgebildet ist, in eine Palette (203) einzugreifen, auf der mehrere offene Kisten (30, 31, 32, 33) abgelegt werden können,
- eine zweite Handhabungseinrichtung, die in der Lage ist, mit einer geradlinigen Bewegung die Stapel aus geöffneten Kisten von dem zweiten Entladeende (201) zu der Palette (203) zu überführen.

3. Anlage nach Anspruch 2, **dadurch gekennzeichnet, dass** die zweite Handhabungseinrichtung eine zweite Schiebeeinrichtung (205) aufweist, die im Wesentlichen horizontal und parallel zu der zweiten Transporteinheit (200) angeordnet ist und angrenzend zu derjenigen Seite (206) der zweiten Transporteinheit (200) liegt, die gegenüberliegend zu der Seite (207) der zweiten Transporteinheit (200) benachbart zu der zweiten Halteeinrichtung (202) angeordnet ist.

4. Anlage nach Anspruch 3, **dadurch gekennzeichnet, dass** sie eine Stopp-Einrichtung (209) aufweist, die an der Position der zweiten Entladetransporteinheit (200) angeordnet ist:
- im Wesentlichen senkrecht zu der zweiten Transporteinheit,
- und vorzugsweise entsprechend zu der Position des zweiten Entladeendes (201), das zu einem Endbereich (210) der zweiten Halteeinrichtung (202) ausgerichtet ist.

5. Anlage nach einem der vorhergehenden Ansprüche, **dadurch gekennzeichnet, dass** sie eine Befehls- und Steuereinrichtung und entsprechende Verbindungseinrichtungen aufweist, die in der Lage sind, aufeinanderfolgend, auch in einer nicht zusammenhängenden Weise, die folgenden Funktionen auszuführen:
- Betätigung des Stabs (105) derart, dass er horizontal angeordnet ist,
- Verschieben des Stabs in Richtung zu der ersten Transporteinheit (100) entsprechend einem ersten vorbestimmten Verfahrweg (C1),
- Veranlassen, dass sich die erste Transporteinheit (100) um eine vorbestimmte Strecke nach vorne bewegt,
- erneutes Verschieben des Stabs (105) in Richtung zu der ersten Transporteinheit (100) entsprechend einem zweiten vorbestimmten Verfahrweg (C2).

6. Anlage nach Anspruch 4 oder 5, **dadurch gekennzeichnet, dass** sie eine Befehls- und Steuereinrichtung aufweist, die ausgebildet ist zum:
- Veranlassen, dass die zweite Transporteinheit (200) sich nach vorne bewegt, bis ein oder mehrere Stapel aus offenen Kisten (30, 31) sich nacheinander an einem ersten Stapel ansammeln, der die Stopp-Einrichtung (209) berührt,
- Veranlassen, dass die zweite Schiebeeinrichtung (205) entsprechend einem dritten vorbestimmten Verfahrweg (C3) aktiv ist und in die Ausgangsposition zurückkehrt,
- Veranlassen, dass sich die zweite Transporteinheit (200) nach vorne bewegt, bis eine aufeinanderfolgende Ansammlung einer vorbestimmten Anzahl aus Kisten an einem ersten Stapel anliegt, der mit der Stopp-Einrichtung (209) in Kontakt ist,
- erneutes Vorwärtsbewegen der zweiten Schiebeeinrichtung (205) entsprechend einem vierten vorbestimmten Verfahrweg (C4).

7. Anlage nach Anspruch 5 und 6, **dadurch gekennzeichnet, dass** sie eine Befehls- und Steuereinrichtung aufweist, die ausgebildet ist zum:
- Speichern der Parameter, die den horizontalen Größen mehrerer entsprechender Arten von Kisten, die unterschiedliche Größen haben, entsprechen,
- Eingeben eines kodierten Befehls in die Befehls- und Steuereinrichtung, der eine spezielle Kistenart repräsentiert, und automatisch bewirkt, dass die Befehls- und Steuereinrichtung geeignete Signale verarbeitet und diese zu den Arbeitseinrichtungen, Komponenten, Geräten, Aktuatoren sendet, die dafür vorgesehen sind, die Stapel aus geschlossenen und offenen Kisten auf den beiden jeweiligen Transporteinheiten (100, 200) und auf der ersten und der zweiten Schiebeeinrichtung (105, 205) in Bewegung zu versetzen, wobei die Signale in der Lage sind zum Anweisen:
des Öffnungs- und Schließbefehls für den Stab (105),
der Längen der Verfahrwege (C1, C2, C3, C4) des entsprechenden Stabs und der jeweiligen zweiten Schiebeeinrichtung (205),
der Längen der Vorwärtsbewegungsstrecken der ersten und der zweiten Transporteinheit (100, 200),
der Arbeitsreihenfolge für den Stab (105) der ersten Transporteinheit (100), der zweiten Transporteinheit (200) und der zweiten Schiebeeinrichtung (205).

## Revendications

1. Installation pour effectuer automatiquement les opérations de chargement et de déchargement d'un appareil capable d'ouvrir les parois latérales fermées d'une pluralité de caisses (20, 21, 22, 23, 30, 31, 32, 33), de préférence de produits d'horticulture, pourvus d'un plan inférieur et de deux couples de parois opposées, chacun d'eux étant articulé audit plan inférieur, et placées de manière ordonnée et identique, et disposées verticalement l'une sur l'autre de façon à former un ou plusieurs empilements, ladite installation étant capable d'effectuer les opérations suivantes:
a) déplacer un ou plusieurs empilements de caisses (20, 21, 22, 23) fermées dans une première station de réception et de chargement (S-1),
b) ouvrir et bloquer les parois opposées de la caisse placée au sommet d'un premier empilement,
c) transférer une caisse ouverte dans une direction horizontale jusqu'à une position surplombant un empilement de caisses précédemment ouvertes disposées sur une seconde station de déchargement (S-2) capable de générer une succession d'empilements de caisses (30, 31, 32, 33) ouvertes,
d) et abaisser ladite caisse ouverte au niveau de support sur le plan inférieur respectif,
**caractérisée en ce que** ladite première station de réception et de chargement (S-1) comprend:
- un premier convoyeur de chargement (100) muni d'une première extrémité de chargement (101) desdits empilements de caisses fermées,
- des premiers moyens de support (102) adjacents à ladite première extrémité (101) aptes à engager une palette (103) sur laquelle peuvent être déposées un ou plusieurs empilements de caisses (20, 21, 22, 23) fermées,
- des premiers moyens de manutention capable de transférer par un mouvement de translation lesdits empilements de caisses (20, 21, 22, 23) fermées de ladite palette (103) jusqu'à ladite première extrémité (101) de chargement, lesdits premiers moyens de manutention comprenant un premier moyen de poussée (105) placé en correspondance du côté (106) desdits premiers moyens de support (102) opposés au côté (107) adjacent audit premier convoyeur (100), ledit premier moyen de poussé (105) étant placé à un niveau légèrement supérieur au niveau dudit premier convoyeur, et comprenant une barre horizontale orientée de préférence parallèlement à la direction dudit premier convoyeur, ladite barre étant munie de moyens de déplacement, de préférence un guide correctement motorisé (108) sur lequel une extrémité (105-A) de ladite barre est faite pour y coulisser, ladite barre pouvant être déplacée vers ledit premier convoyeur et éloignée de celui-ci avec un mouvement de translation sensiblement orthogonal par rapport audit premier convoyeur (100), ladite barre (105) étant munie de moyens capables de la faire pivoter selon un axe de rotation (X) fondamentalement horizontal et orthogonal à la barre elle-même, ledit axe de rotation (X) passant par ladite extrémité (105-A) de ladite barre (105) sur laquelle ledit guide motorisé (108) est engagé, de manière à ouvrir un passage au-dessus desdits premiers moyens de support (102).

2. L'installation selon la revendication 1, **caractérisée en ce que** ladite seconde station de déchargement (S-2) comprend:
- un second convoyeur de déchargement (200) muni d'une seconde extrémité de déchargement (201) de ladite succession d'empilements de caisses (30, 31, 32, 33) ouvertes,
- des seconds moyens de support (202) adjacents à ladite seconde extrémité (201), et capables d'engager une palette (203) sur laquelle une pluralité de caisses (30, 31, 32, 33) ouvertes peuvent être posées,
- des seconds moyens de manutention aptes à transférer avec un mouvement de translation lesdits empilements de caisses ouvertes de ladite seconde extrémité de déchargement (201) vers ladite palette (203).

3. L'installation selon la revendication 2, **caractérisée en ce que** lesdits seconds moyens de manipulation comprennent un second moyen de poussée (205) disposé sensiblement horizontalement et parallèlement audit second convoyeur (200) et disposé à côté du côté (206) dudit second convoyeur (200) qui est placé à l'opposé du côté (207) dudit second convoyeur (200) adjacent auxdits seconds moyens de support (202).

4. L'installation selon la revendication 3, **caractérisée en ce qu'**elle comprend un moyen d'arrêt (209) placé sur la position dudit second convoyeur de déchargement (200):
- sensiblement orthogonal audit second convoyeur,
- et préférablement correspondant à la position de ladite seconde extrémité de déchargement (201) alignée sur une partie d'extrémité (210) desdits seconds moyens de support (202)

5. L'installation selon l'une quelconque des revendications précédentes, **caractérisée en ce qu'**elle comprend des moyens de commande et de contrôle, et des moyens de liaison respectifs, aptes à réaliser successivement, également de manière non continue, les opérations suivantes:
- activer ladite barre (105) de façon à la placer horizontalement,
- déplacer ladite barre vers ledit premier convoyeur (100) pour une première course prédéfinie (C1),
- faire avancer ledit premier convoyeur (100) sur une distance prédéterminée,
- déplacer à nouveau ladite barre (105) vers ledit premier convoyeur (100) pour une seconde course prédéterminée (C2) .

6. L'installation selon la revendication 4 ou 5, **caractérisée en ce qu'**elle comprend des moyens de commande et de contrôle aptes à:
- faire avancer ledit second convoyeur (200) jusqu'à ce qu'un ou plusieurs empilements de caisses (30, 31) ouvertes s'accumulent successivement contre un premier empilement en contact avec ledit moyen d'arrêt (209),
- faire travailler lesdits seconds moyens de poussée (205) sur une troisième course prédéterminée (C3), et revenir dans la position de départ,
- faire avancer ledit second convoyeur (200) jusqu'à une accumulation successive d'un nombre prédéterminé de caisses contre un premier empilement en contact avec ledit moyen d'arrêt (209),
- avancer à nouveau lesdits seconds moyens de poussée (205) sur une quatrième course prédéterminée respective (C4) .

7. L'installation selon les revendications 5 et 6, **caractérisée en ce qu'**elle comprend des moyens de commande et de contrôle aptes à:
- mémoriser les paramètres correspondant aux dimensions horizontales d'une pluralité respective de types de caisses présentant des tailles différentes,
- introduire dans lesdits moyens de commande et de contrôle une instruction codée représentative d'un type de caisse spécifique, et obtenir automatiquement que lesdits moyens de commande et de contrôle traitent et transmettent aux dispositifs de travail, organes, dispositifs, actionneurs chargés de déplacer lesdits empilements de caisses fermées et de caisses ouvertes sur lesdits deux convoyeurs (100, 200) respectifs et sur lesdits premier et second moyens de poussée (105, 205) des signaux appropriés aptes à déterminer soit:
• la commande d'ouverture et de fermeture de ladite barre (105),
• les longueurs desdites courses (C1, C2, C3, C4) de la barre respective et des seconds moyens de poussée (205) respectifs,
• la longueur des longueurs de déplacement vers l'avant desdits premier et second convoyeurs (100, 200),
• la séquence de travail de ladite barre (105) dudit premier convoyeur (100), dudit second convoyeur (200) et desdits seconds moyens de poussée (205).
